# EUROPEAN PATENT APPLICATION

(11) **EP 4 422 248 A1**
(43) Date of publication of application: **28.08.2024**
(21) Application number: 22882893.5
(22) Date of filing: 19.10.2022
(51) Int. Cl.: H04W 24/02

(54) **MODEL REQUEST METHOD, MODEL REQUEST PROCESSING METHOD AND RELATED DEVICE**

(30) Priority: 21.10.2021 CN 202111229121
(71) Applicant: Vivo Mobile Communication Co., Ltd., Dongguan, Guangdong 523863 (CN)
(72) Inventor: PAN, Xiang, Dongguan, Guangdong 523863 (CN); YANG, Xiaodong, Dongguan, Guangdong 523863 (CN); KIMBA DIT ADAMOU, Boubacar, Dongguan, Guangdong 523863 (CN)
(74) Representative: Lavoix
(86) International application number: PCT/CN2022/126134
(87) International publication number: WO 2023/066288

(57) **Abstract**

This application discloses a model request method, a model request processing method, and a related device, and pertains to the field of communication technologies. In the embodiments of this application, the model request method includes: A terminal sends a target request to a network side device, where the target request is used to request information about an artificial intelligence AI model; the terminal receives the information about the AI model sent by the network side device; and the terminal obtains the AI model based on the information about the AI model.

## Description

### CROSS-REFERENCE TO RELATED APPLICATIONS

This application claims priority to Chinese Patent Application No.202111229121.X, filed on October 21, 2021 in China, which is incorporated herein by reference in its entirety.

### TECHNICAL FIELD

This application pertains to the field of communication technologies, and in particular, to a model request method, a model request processing method, and a related device.

### BACKGROUND

With the development of communication technologies, an artificial intelligence (Artificial Intelligence, AI) module is used in a communication system to process and analyze information. To be applicable to different communication environments and compatible with different communication scenarios, a large amount of training data is needed in an AI model training process. As a result, a network model after training is relatively large. In the AI model training process, if data only in a specific scenario is used for training, a model after training is relatively small. However, in this way, a generalization ability of the network model is insufficient, and an overfitting problem occurs.

### SUMMARY

Embodiments of this application provide a model request method, a model request processing method, and a related device, which can feed back a response AI model based on a request of a terminal device, thereby reducing influence caused by an insufficient generalization ability of the AI model while controlling a size of the AI model.

According to a first aspect, a model request method is provided, including:
A terminal sends a target request to a network side device, where the target request is used to request information about an artificial intelligence AI model;
the terminal receives the information about the AI model sent by the network side device; and
the terminal obtains the AI model based on the information about the AI model.

According to a second aspect, a model request processing method is provided, including:
A network side device receives a target request sent by a terminal;
the network side device obtains information about an AI model based on the target request; and
the network side device sends the information about the AI model to the terminal.

According to a third aspect, a model request apparatus is provided, including:
a first sending module, configured to send a target request to a network side device, where the target request is used to request information about an artificial intelligence AI model;
a first receiving module, configured to receive the information about the AI model sent by the network side device; and
a processing module, configured to obtain the AI model based on the information about the AI model.

According to a fourth aspect, a model request processing apparatus is provided, including:
a second receiving module, configured to receive a target request sent by a terminal;
a generation module, configured to obtain information about an AI model based on the target request; and
a second sending module, configured to send the information about the AI model to the terminal.

According to a fifth aspect, a terminal is provided, where the terminal includes a processor, a memory, and a program or an instruction that is stored in the memory and that can be run on the processor, and when the program or the instruction is executed by the processor, steps of the method according to the first aspect are implemented.

According to a sixth aspect, a terminal is provided, including a processor and a communication interface, where
the communication interface is configured to: send a target request to a network side device, where the target request is used to request information about an artificial intelligence AI model; and receive the information about the AI model sent by the network side device; and
the processor is configured to obtain the AI model based on the information about the AI model.

According to a seventh aspect, a network side device is provided, where the network side device includes a processor, a memory, and a program or an instruction that is stored in the memory and that can be run on the processor, and when the program or the instruction is executed by the processor, steps of the method according to the second aspect are implemented.

According to an eighth aspect, a network side device is provided, including a processor and a communication interface, where
the communication interface is configured to receive a target request sent by a terminal;
the processor is configured to obtain information about an artificial intelligence AI model based on the target request; and
the communication interface is further configured to send the information about the AI model to the terminal.

According to a ninth aspect, a readable storage medium is provided, where the readable storage medium stores a program or an instruction, and when the program or the instruction is executed by a processor, steps of the method according to the first aspect or steps of the method according to the second aspect are implemented.

According to a tenth aspect, an embodiment of this application provides a chip, where the chip includes a processor and a communication interface, the communication interface is coupled to the processor, and the processor is configured to run a program or an instruction to implement steps of the method according to the first aspect or steps of the method according to the second aspect.

According to an eleventh aspect, a computer program product is provided, where the computer program product is stored in a non-transitory storage medium, and the computer program product is executed by at least one processor to implement the method according to the first aspect or the method according to the second aspect.

According to a twelfth aspect, a communication device is provided, configured to perform the method according to the first aspect or the method according to the second aspect.

In the embodiments of this application, a terminal sends a target request to a network side device, where the target request is used to request information about an artificial intelligence AI model; the terminal receives the information about the AI model sent by the network side device; and the terminal obtains the AI model based on the information about the AI model. In this way, different AI models may be set based on different communication scenarios, and the terminal dynamically obtains information about an AI model in a request manner, so that impact caused by an insufficient generalization ability of the AI model can be reduced while a size of the AI model is controlled, thereby improving transmission reliability.

### BRIEF DESCRIPTION OF DRAWINGS

FIG. 1 is a structural diagram of a network system to which the embodiments of this application may be applied;
FIG. 2 is a structural diagram of a neuron to which the embodiments of this application may be applied;
FIG. 3 is a flowchart of a model request method according to an embodiment of this application;
FIG. 4 is a flowchart of a model request processing method according to an embodiment of this application;
FIG. 5 is a structural diagram of a model request apparatus according to an embodiment of this application;
FIG. 6 is a structural diagram of a model request processing apparatus according to an embodiment of this application;
FIG. 7 is a structural diagram of a communication device according to an embodiment of this application;
FIG. 8 is a structural diagram of a terminal according to an embodiment of this application; and
FIG. 9 is a structural diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and the character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. Anew radio (New Radio, NR) system is described in the following descriptions for illustrative purposes, and the NR term is used in most of the following descriptions, although these technologies can also be applied to an application other than an NR system application, such as a 6th generation (6th Generation, 6G) communication system.

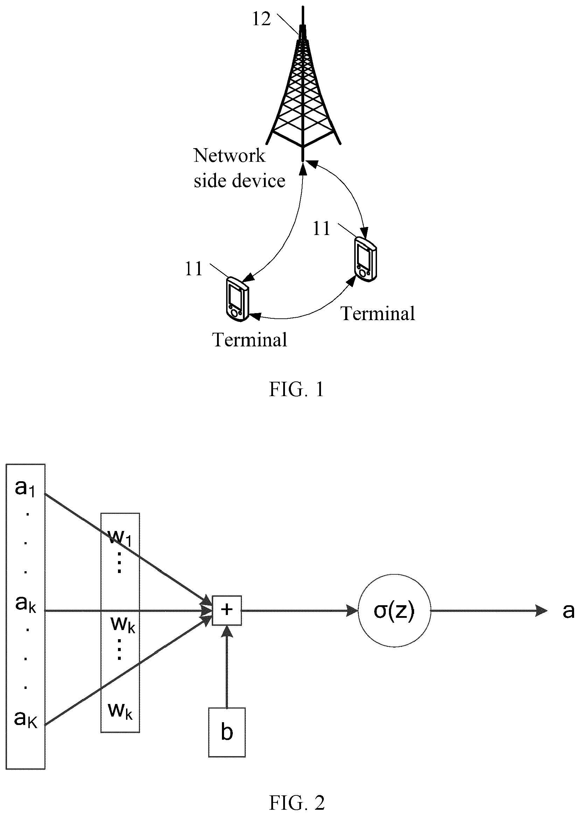

FIG. 1 is a block diagram of a wireless communication system to which the embodiments of this application may be applied. The wireless communication system includes terminals 11 and a network side device 12. The terminal 11 may be a terminal side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), pedestrian user equipment (Pedestrian User Equipment, PUE), a smart home device (a home device having a wireless communication function, such as a refrigerator, a television, a washing machine, or furniture). The wearable device includes a smart watch, a smart band, a smart headset, smart glasses, smart jewelry (a smart bracelet, a smart chain bracelet, a smart ring, a smart necklace, a smart anklet, a smart chain anklet, or the like), a smart wristband, smart clothes, a game console, or the like. It should be noted that a specific type of the terminal 11 is not limited in the embodiments of this application. The network side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a wireless local area network (Wireless Local Area Network, WLAN) access point, a Wi-Fi node, a transmission reception point (Transmission Reception Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

For ease of understanding, the following describes some content in the embodiments of this application.

### 1. Artificial intelligence

Currently, artificial intelligence is widely applied in various fields. An AI module has various implementations, such as a neural network, a decision tree, a support vector machine, and a Bayes classifier. In this application, the neural network is used as an example for description, but a specific type of the AI module is not limited.

Optionally, the neural network includes a neuron. FIG. 2 shows a structure of the neuron, where ai, a₂, ..., and a_{K} are inputs, w is a weight, namely, a multiplicative coefficient, and b is a bias, namely, an additive coefficient, and σ(.) is an activation function. Common activation functions include Sigmoid, tanh, a rectified linear unit (Rectified Linear Unit, ReLU), and the like. *z* = *a*₁*w*₁ +···+*aₖwₖ* +···+*a_{K}w_{K}* +*b*.

Parameters of the neural network are optimized by using an optimization algorithm. The optimization algorithm is an algorithm that can help minimize or maximize an objective function. The objective function may also be referred to as a loss function. The objective function is often a mathematical combination of a model parameter and data. For example, given data X and a corresponding label Y, a neural network model f (.) is constructed. After the model is constructed, a predicted output f(x) can be obtained based on the input x, and a difference (f(x)-Y) between a predicted value and a true value can be calculated. This is a loss function. The purpose is to find appropriate W and b so that a value of the loss function reaches a minimum. A smaller loss value indicates that an output of the model is closer to a real situation.

Currently, common optimization algorithms are basically based on an error back propagation (error Back Propagation, BP) algorithm. A basic idea of the BP algorithm is that a learning process consists of two processes: signal forward propagation and error back propagation. During forward propagation, an input sample is transferred from an input layer to an output layer after being processed by each hidden layer. If an actual output of the output layer does not match an expected output, error back propagation is performed. Error back propagation is to transmit an output error layer by layer to the input layer through a hidden layer in some form for back propagation, and allocate the error to all units of each layer, to obtain an error signal of a unit at each layer. This error signal is used as a basis for correcting a weight of each unit. A weight adjustment process of each layer during signal forward propagation and error back propagation is carried out repeatedly. A process of continuously adjusting a weight is a learning and training process of a network. This process continues until errors output by the network are reduced to an acceptable level or until a preset quantity of learning times are reached.

Common optimization algorithms include gradient descent (Gradient Descent), stochastic gradient descent (Stochastic Gradient Descent, SGD), mini-batch gradient descent (mini-batch gradient descent), momentum (Momentum), stochastic gradient descent with momentum (Nesterov), adaptive gradient descent (Adaptive Gradient descent, Adagrad), Adadelta, root mean square prop (root mean square prop, RMSprop), adaptive moment estimation (Adaptive Moment Estimation, Adam), and the like.

During error back propagation, in these optimization algorithms, an error/loss is obtained according to the loss function, a gradient is obtained by calculating a derivative/partial derivative of a current neuron, and adding an effect such as a learning rate and a previous gradient/derivative/partial derivative, and the gradient is transferred to an upper layer.

### 2. AI model complexity, generalization ability, and an overfitting problem

Generally, based on different solving types, a selected AI algorithm and a used model are also different. According to the currently published articles and public research results, a main method for improving 5G network performance with AI is to enhance or replace existing algorithms or processing modules by using a neural network-based algorithm and model. In a specific scenario, the neural network-based algorithm and model may achieve better performance than a deterministic-based algorithm. A common neural network includes a deep neural network, a convolutional neural network, a recurrent neural network, and the like. With the help of existing AI tools, the neural network can be built, trained, and verified.

A design core of the neural network is to combine a problem to be resolved and data, to complete building of the neural network. Key steps of building the neural network include selecting a stacking manner of a multi-layer network, selecting a quantity and a depth of neurons of each layer of network, selecting an activation function, and the like. To achieve better performance, a network depth and a quantity of neurons usually need to be increased. As the network depth and the quantity of neurons increase, a quantity of hyperparameters that need to be trained increase rapidly, neural network training consumes computing resources, and network training difficulty greatly increases. In addition, as the network depth increases, vanishing gradient and exploding gradient problems also become more prominent, which needs to be fully considered during design of the activation function.

A large-size neural network is not only difficult to train, but also prone to an overfitting problem. Overfitting mainly performs well in a data set for training, but not well in a data set for non-training. A model that performs well on the training data set but not well on the non-training data set is often considered to have a poor generalization ability. The generalization ability is a core factor for 5G to introduce AI-based algorithms and models. To improve the generalization ability of the model and prevent an occurrence of overfitting, some existing model tools may be used, or a relatively small network may be used at the expense of some performance.

A relationship between performance of the algorithms and models and the data set is inseparable. If there is a large difference between a training data set and a test data set, it is difficult to obtain good performance on the test data set according to a model obtained from the training set. An ideal mode is that a training data set, a test data set, and actually processed data have very good consistency, and a model trained under this condition may have a relatively good effect. However, in an actual data set construction process, limited by various actual conditions, a data set used for training and testing does not very well match data processed in an actual scenario. In this case, not only continuous data enrichment needs to be considered, but also a data set needs to be constructed more rationally in combination with a feature of the algorithms and models under a limited data condition and based on an actual situation, to form a benign interaction between data set construction and algorithm and model exploration, improve algorithm and model performance, and construct a classic data set at the same time.

Model training and update are another problem that requires attention. Model training may be performed in a network device, a cloud, or an edge device. During model training, data needs to be transferred to a network element or cloud for training. The trained model is updated to a corresponding module. Data collection and transmission not only relate to a privacy problem of the data, but also bring some requirements for network transmission. If model using and model training are not in a same network element, model transmission needs to be further performed, and frequent model transmission also needs to consume more network resources. A computing power consumed by the model update, required network resources, and a timeliness requirement are also important factors that need to be considered during algorithm and model design.

With reference to the accompanying drawings, a model request method provided in the embodiments of this application is described in detail by using some embodiments and application scenarios thereof.

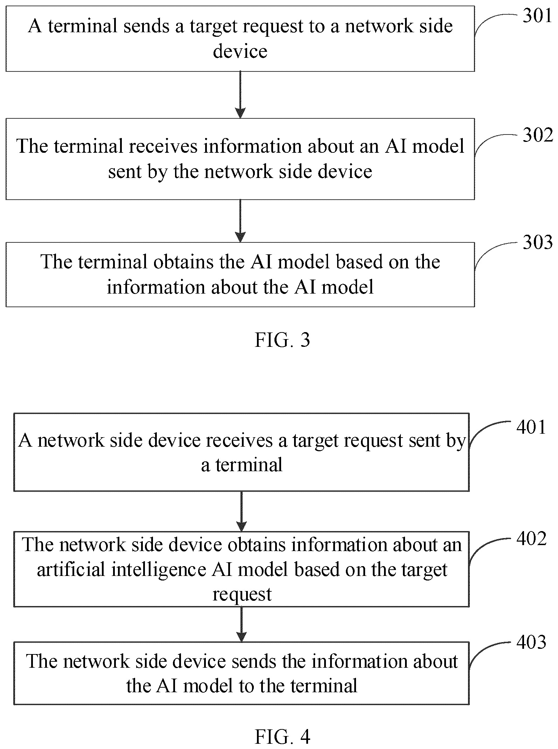

Refer to FIG. 3. FIG. 3 is a flowchart of a model request method according to an embodiment of this application. As shown in FIG. 3, the method includes the following steps.

Step 301: A terminal sends a target request to a network side device, where the target request is used to request information about an artificial intelligence AI model.

In this embodiment of this application, the target request may be used to obtain information about an AI model not configured on the terminal side, or may be used to update an AI model on the terminal side. For example, when there is no corresponding AI model in the terminal, the terminal may send the target request to the network side device to obtain the information about the AI model, to configure a corresponding AI model. When the terminal preconfigures an AI model, the terminal may send the target request to the network side device to update the AI model on the terminal side, to match a current communication scenario.

Step 302: The terminal receives the information about the AI model sent by the network side device.

Step 303: The terminal obtains the AI model based on the information about the AI model.

In this embodiment of this application, the network side device may send the information about the AI model by using a radio resource control (Radio Resource Control, RRC) configuration message, or may send the information about the AI model by using an RRC reconfiguration (RRC Reconfiguration) message, or may broadcast the information about the AI model by using a system information block (System Information Block, SIB).

After the terminal receives the information about the AI model, an AI model on the terminal side may be configured or updated based on the information about the AI model. In this way, it can be ensured that the terminal and the network side device have a consistent understanding of the AI model, thereby improving transmission reliability.

In this embodiment of this application, a terminal sends a target request to a network side device, where the target request is used to request information about an artificial intelligence AI model; the terminal receives the information about the AI model sent by the network side device; and the terminal obtains the AI model based on the information about the AI model. In this way, different AI models may be set based on different communication scenarios, and the terminal dynamically obtains information about an AI model in a request manner, so that impact caused by an insufficient generalization ability of the AI model can be reduced while a size of the AI model is controlled, thereby improving transmission reliability.

Optionally, in some embodiments, that a terminal sends a target request to a network side device includes:
In a case that a first condition is met, the terminal sends the target request to the network side device, where
the first condition includes at least one of the following:
   a location of the terminal meets a first preset condition;
   a first measurement quantity of the terminal falls within a preconfigured first measurement result range;
   a first transmission parameter of the terminal meets a second preset condition;
   there is a first requirement for the terminal; and
   the terminal does not have the AI model.

In this embodiment of this application, the first condition may be specified by a protocol, or may be configured by the network side device. It should be understood that, in this embodiment of this application, in a case that the first condition is met, it indicates that there is no corresponding AI model in the terminal. That is, information about the corresponding AI model is not configured in advance by the network side device. The target request is used to request the network side to configure the information about the AI model for the terminal. After receiving the information about the AI model, the terminal may configure an AI model or generate an AI model based on the information about the AI model, to execute a corresponding terminal behavior by using the AI model. For example, the AI model is used for terminal behaviors such as mobility management and positioning.

Optionally, the first preset condition includes at least one of the following:
A serving cell in which the terminal is located falls within a first cell identifier range corresponding to a preconfigured cell identifier;
a tracking area (Tracking Area, TA) in which the terminal is located falls within a first tracking area identifier range corresponding to a preconfigured TA identifier;
a RAN-based notification area (RAN-based Notification Area, RNA) in which the terminal is located falls within a first area range corresponding to a preconfigured RNA;
a public land mobile network (Public Land Mobile Network, PLMN) in which the terminal is located falls within a first communication network range corresponding to a preconfigured PLMN; and
a geographical location of the terminal falls within a preconfigured first geographical location range.

In this embodiment of this application, the first cell identifier range may be understood as a preconfigured cell identifier list. When a cell identifier of the serving cell in which the terminal is located belongs to the cell identifier list, it may be determined that the serving cell in which the terminal is located falls within the preconfigured first cell identifier range corresponding to the cell identifier. The first tracking area identifier range may be understood as a preconfigured tracking area list. When a TA identifier corresponding to the TA in which the terminal is located belongs to the first tracking area list, it may be determined that the TA in which the terminal is located falls within the first tracking area identifier range corresponding to the preconfigured TA identifier. The first area range may be understood as an RNA list. When the RNA in which the terminal is located belongs to the RNA list, it may be determined that the RNA in which the terminal is located falls within the first area range corresponding to the preconfigured RNA.

Optionally, in some implementations, the second preset condition includes at least one of the following:
A channel characteristic parameter or a preset representation of the channel characteristic parameter falls within a preconfigured first parameter range;
phase information between different transmit antennas or different transmit ports conforms to preconfigured first phase information, or a preset representation of the phase information between different transmit antennas or different transmit ports conforms to the first phase information;
a beam measurement parameter or a specific representation of the beam measurement parameter falls within a preconfigured second parameter range;
information corresponding to different receive beams conforms to preconfigured first beam information, or a specific representation of the information corresponding to different receive beams conforms to the first beam information;
information corresponding to different beam pairs conforms to preconfigured second beam information, or a specific representation of the information corresponding to different beam pairs conforms to the second beam information;
a measurement parameter obtained on at least one frequency falls within a preconfigured third parameter range;
data demodulation soft information conforms to preconfigured first preset information, or a specific representation of the data demodulation soft information conforms to the first preset information;
a transmission bit error rate of a data packet conforms to preconfigured second preset information, or a specific representation of the transmission bit error rate of the data packet conforms to the second preset information;
a transmission block error rate of a data packet conforms to preconfigured third preset information, or a specific representation of the transmission block error rate of the data packet conforms to the third preset information; and
interference measurement information conforms to preconfigured fourth preset information, or a specific representation of the interference measurement information conforms to the fourth preset information.

It should be understood that the data packet may include at least one of the following: a physical layer data packet, a medium access control (Medium Access Control, MAC) layer data packet, a radio link control (Radio Link Control, RLC) layer data packet, a packet data convergence protocol (Packet Data Convergence Protocol, PDCP) layer data packet, and an Internet Protocol (Internet Protocol, IP) layer data packet.

Optionally, that a terminal sends a target request to a network side device includes:
In a case that a second condition is met, the terminal sends the target request to the network side device, where the second condition is an update condition of the AI model; and
that the terminal obtains the AI model based on the information about the AI model includes:
   the terminal updates an original AI model based on the information about the AI model, to obtain a target AI model.

In this embodiment of this application, the terminal configures a corresponding AI model, but the AI model needs to be updated. For example, when the AI model is in an invalid state or a deactivated state, the AI model may be updated by using the target request. The network side device may reconfigure information about the AI model for the terminal by using an RRC reconfiguration message, and the terminal updates the original AI model based on the information about the AI model.

It should be noted that the terminal may update information about an AI model based on the information about the original AI model in a difference manner, and then update the AI model based on the updated information about the AI model, for example, configure or generate a new AI model and then replace the original AI model. It should be understood that the information about the AI model may include only to-be-updated information about the AI model, or include all updated information about the AI model. This is not further limited herein.

Optionally, in some embodiments, the second condition includes at least one of the following:
A location of the terminal meets a third preset condition;
a first measurement quantity of the terminal falls within a preconfigured second measurement result range;
a first transmission parameter of the terminal meets a fourth preset condition;
there is a first requirement for the terminal;
an inference result confidence of the AI model reaches a threshold;
a validity period of the AI model expires;
the terminal moves outside a valid area of the AI model; and
the terminal has no valid AI model.

In this embodiment of this application, that the terminal has no valid AI model may be understood as that a required AI model is in an invalid state or a deactivated state. In a case that at least one of the following conditions is met, it may be determined that the AI model is in an invalid state:
the validity period of the AI model expires; and
the terminal moves outside the valid area of the AI model.

It should be understood that, in this embodiment of this application, the valid area is determined based on at least one of the following: a cell list, a TA list, an RNA list, a PLMN list, and a geographical location.

Optionally, the third preset condition includes at least one of the following:
A serving cell in which the terminal is located falls within a second cell identifier range corresponding to a preconfigured cell identifier;
a TA in which the terminal is located falls within a second tracking area identifier range corresponding to a preconfigured TA identifier;
an RNA in which the terminal is located falls within a second area range corresponding to a preconfigured RNA;
a PLMN in which the terminal is located falls within a second communication network range corresponding to a preconfigured PLMN; and
a geographical location of the terminal falls within a preconfigured second geographical location range.

In this embodiment of this application, a difference between the third preset condition and the first preset condition lies in that values corresponding to each range are different. A value corresponding to each range in the first preset condition and the third preset condition may be set according to an actual requirement. This is not further limited herein.

Optionally, in some embodiments, the fourth preset condition includes at least one of the following:
A channel characteristic parameter or a preset representation of the channel characteristic parameter falls within a preconfigured fourth parameter range;
phase information between different transmit antennas or different transmit ports conforms to preconfigured second phase information, or a preset representation of the phase information between different transmit antennas or different transmit ports conforms to the second phase information;
a beam measurement parameter or a specific representation of the beam measurement parameter falls within a preconfigured fifth parameter range;
information corresponding to different receive beams conforms to preconfigured third beam information, or a specific representation of the information corresponding to different receive beams conforms to the third beam information;
information corresponding to different beam pairs conforms to preconfigured fourth beam information, or a specific representation of the information corresponding to different beam pairs conforms to the fourth beam information;
a measurement parameter obtained on at least one frequency falls within a preconfigured sixth parameter range;
data demodulation soft information conforms to preconfigured fifth preset information, or a specific representation of the data demodulation soft information conforms to the fifth preset information;
a transmission bit error rate of a data packet conforms to preconfigured sixth preset information, or a specific representation of the transmission bit error rate of the data packet conforms to the sixth preset information;
a block error rate conforms to preconfigured seventh preset information, or a specific representation of the block error rate conforms to the seventh preset information; and
interference measurement information conforms to preconfigured eighth preset information, or a specific representation of the interference measurement information conforms to the eighth preset information.

In this embodiment of this application, a difference between the fourth preset condition and the second preset condition lies in that values corresponding to each range are different. A value corresponding to each range in the second preset condition and the fourth preset condition may be set according to an actual requirement. This is not further limited herein.

Optionally, in some embodiments, the first measurement quantity includes at least one of the following: a signal noise ratio (Signal Noise Ratio, SNR), a reference signal received power (Reference Signal Received Power, RSRP), a signal-to-noise and interference ratio (Signal-to-noise and Interference Ratio, SINR), reference signal received quality (Reference Signal Received Quality, RSRQ), a packet delay (packet delay), round-trip time (Round-Trip Time, RTT), an observed time difference of arrival (Observed time difference of arrival, OTDOA), a measurement result corresponding to channel state information (Channel State Information, CSI), and a measurement result corresponding to user quality of experience (Quality of Experience, QoE).

It should be noted that, in this embodiment of this application, the first measurement quantity includes a measurement quantity corresponding to a serving cell and a measurement quantity corresponding to a neighboring cell.

Optionally, in some embodiments, a measurement resource corresponding to the first measurement quantity includes at least one of the following:
a physical downlink control channel (Physical downlink control channel, PDCCH) demodulation reference signal (Demodulation Reference Signal, DMRS);
a physical downlink shared channel (Physical downlink shared channel, PDSCH) DMRS;
a channel state information reference signal (Channel State Information Reference Signal, CSI-RS);
a synchronization signal and PBCH block (Synchronization Signal and PBCH block, SSB); and
a positioning reference signal (Positioning Reference Signal, PRS).

In this embodiment of this application, the measurement resource corresponding to the first measurement quantity may be preconfigured or prespecified. This is not further limited herein.

Optionally, in some embodiments, the first transmission parameter includes at least one of the following:
a channel characteristic parameter;
phase information between different transmit antennas or different transmit ports;
a measurement parameter obtained on at least one beam;
information corresponding to different beam pairs;
a measurement parameter obtained on at least one frequency;
data demodulation soft information;
a transmission bit error rate or block error rate of a data packet; and
interference measurement information.

It should be understood that the beam pair include a transmit beam and a receive beam. The data packet includes at least one of the following: a physical layer data packet, a MAC layer data packet, an RLC layer data packet, a PDCP layer data packet, and an IP layer data packet.

Optionally, in some embodiments, the first requirement includes at least one of the following: reporting of a radio resource management (Radio resource management, RRM) measurement report, handover decision, redirection decision, positioning result generation, reporting of channel state information (Channel State Information, CSI), user track prediction, user service requirement prediction, and user slice requirement prediction.

In this embodiment of this application, that there is a first requirement for the terminal may be understood as that the terminal needs to perform an operation corresponding to the first requirement. For example, in a case that the terminal needs to report an RRM measurement report, the terminal needs to perform handover decision, the terminal needs to perform redirection decision, the terminal needs to generate a positioning result, or the like, it may be determined that there is the corresponding first requirement for the terminal, to trigger the terminal to send the target request. It should be noted that, before the terminal is triggered to send the target request, the terminal first determines whether there is an available AI model. If there is an available AI model, the terminal does not send the target request. If there is no available AI model, the terminal sends the target request. That there is no available AI model may be understood as that there is no corresponding AI model, or there is a corresponding AI model but the AI model is in an invalid state.

Optionally, in some embodiments, the information about the AI model includes at least one of the following: an identifier of the AI model, an output parameter of the AI model, structure information about the AI model, model parameter information about the AI model, and processing mode information about data of the AI model.

In this embodiment of this application, the identifier of the AI model uniquely identifies a single AI model in a terminal.

Optionally, the structure information about the AI model may include a specific type and a specific structure of the AI model. The specific type may mean a Gaussian process, a support vector machine, various neural network methods, and the like. The specific structure may mean a quantity of layers of a neural network, a quantity of neurons at each layer, an activation function, and the like.

Optionally, the model parameter information about the AI model may be understood as a hyperparameter configuration of the AI model.

Optionally, the processing mode information may be understood as preprocessing data before the data is input into the AI model, including but not limited to normalization, upsampling, downsampling, and the like.

Optionally, in some embodiments, the information about the AI model includes at least one of the following: the update condition of the AI model, the validity period of the AI model, the valid area of the AI model, an input parameter of the AI model, and a default value corresponding to the input parameter of the AI model.

Optionally, the update condition of the AI model is used to instruct the terminal to send the target request, to update the AI model. For example, the update condition may be the second condition. Specifically, after receiving the update condition, the terminal may update the second condition associated with a locally stored AI model.

Optionally, the validity period of the AI model may be understood as an effective time of the AI model. In the validity period of the AI model, the AI model is in a valid state or an activated state, and the AI model may be used to perform a related operation, for example, performing prediction or reporting information generation. Specifically, a timer may be set, and an initial value of the timer is a validity duration of the AI model. It should be understood that an effective start time of the AI model may be set according to an actual requirement. For example, the terminal may start the timer after receiving the information about the AI model, may start the timer after a preset duration of a time unit in which the received information about the AI model is located, or may start the timer at a start moment indicated by the network side device. A manner in which the network side device indicates the validity period of the AI model may be set according to an actual requirement. In some embodiments, the network side device may use at least one of the following to indicate the validity duration of the AI model: the initial value of the timer and the start moment of the timer.

Optionally, the valid area of the AI model may be understood as an effective area of the AI model. When the terminal is in the valid area, the AI model is in a valid state or an activated state, and the AI model may be used to perform a related operation. When the terminal is outside the valid area, the AI model is invalid.

Optionally, each input parameter of the AI model may be associated with a default identifier. If the default identifier indicates that the input parameter can be set as default, the parameter may not be input when the input parameter cannot be obtained. An input parameter indicating an AI model may be understood as an association relationship between the input parameter indicating the AI model and the default identifier. For example, an input parameter indicated in the information about the AI model is a non-default input parameter or a default output parameter, or the information about the AI model directly indicates an association relationship between each input parameter of the AI model and the default identifier.

Optionally, in a case that the information about the AI model indicates a default value corresponding to the input parameter of the AI model, when the terminal cannot obtain a corresponding input value, the default value may be used as an input.

Optionally, in some embodiments, the target request carries at least one of the following: terminal state information, a radio signal measurement result, AI capability information, and preference information for the AI model.

Optionally, the terminal state information includes at least one of the following:
location information about the terminal;
moving information about the terminal; and
service information about the terminal.

In this embodiment of this application, the location information may be a global positioning system (Global Positioning System, GPS) measurement result, the moving information may include a moving direction and a moving speed, and the service information may include a low-latency service that is being performed.

Optionally, the radio signal measurement result includes at least one of the following:
an RSRP of the network side device; and
RSRQ of the network side device.

In this embodiment of this application, the RSRP of the network side device may include at least one of the following: an RSRP of a serving cell and an RSRP of a neighboring cell. The RSRQ of the network side device may include at least one of the following: RSRQ of a serving cell and RSRQ of a neighboring cell.

Optionally, the AI capability information includes at least one of the following:
a supported AI model structure
a supported AI model data processing mode; and
a supported AI model input parameter, for example, whether a specific input parameter is supported.

Optionally, the preference information may be understood as expected information or recommended information about the terminal. Specifically, the preference information includes at least one of the following: a preference for a structure of the AI model and a preference for a data processing mode of the AI model.

Refer to FIG. 4. FIG. 4 is a flowchart of a model request processing method according to an embodiment of this application. As shown in FIG. 4, the method includes the following steps.

Step 401: A network side device receives a target request sent by a terminal.

Step 402: The network side device obtains information about an artificial intelligence AI model based on the target request.

Step 403: The network side device sends the information about the AI model to the terminal.

Optionally, the target request carries at least one of the following: terminal state information, a radio signal measurement result, AI capability information, and preference information for the AI model.

Optionally, the information about the AI model includes at least one of the following: an identifier of the AI model, an output parameter of the AI model, structure information about the AI model, model parameter information about the AI model, and processing mode information about data of the AI model.

Optionally, the information about the AI model includes at least one of the following: an update condition of the AI model, a validity period of the AI model, a valid area of the AI model, an input parameter of the AI model, and a default value corresponding to the input parameter of the AI model.

Optionally, the terminal state information includes at least one of the following:
location information about the terminal;
moving information about the terminal; and
service information about the terminal.

Optionally, the radio signal measurement result includes at least one of the following:
an RSRP of the network side device; and
RSRQ of the network side device.

Optionally, the AI capability information includes at least one of the following:
a supported AI model structure;
a supported AI model data processing mode; and
a supported AI model input parameter.

Optionally, the preference information includes at least one of the following: a preference for a structure of the AI model and a preference for a data processing mode of the AI model.

Optionally, the information about the AI model includes at least one of the following: an identifier of the AI model, an output parameter of the AI model, structure information about the AI model, model parameter information about the AI model, and processing mode information about data of the AI model.

Optionally, the information about the AI model includes at least one of the following: an update condition of the AI model, a validity period of the AI model, a valid area of the AI model, an input parameter of the AI model, and a default value corresponding to the input parameter of the AI model.

It should be noted that this embodiment is used as an implementation of the network side device corresponding to the embodiment shown in FIG. 2. For a specific implementation of this embodiment, refer to the related descriptions of the embodiment shown in FIG. 2. A same beneficial effect can also be achieved. To avoid repeated descriptions, details are not described again herein.

It should be noted that the model request method provided in this embodiment of this application may be performed by a model request apparatus, or a control module that is in the model request apparatus and that is configured to perform the model request method. In this embodiment of this application, the model request apparatus provided in this embodiment of this application is described by using an example in which the model request apparatus performs the model request method.

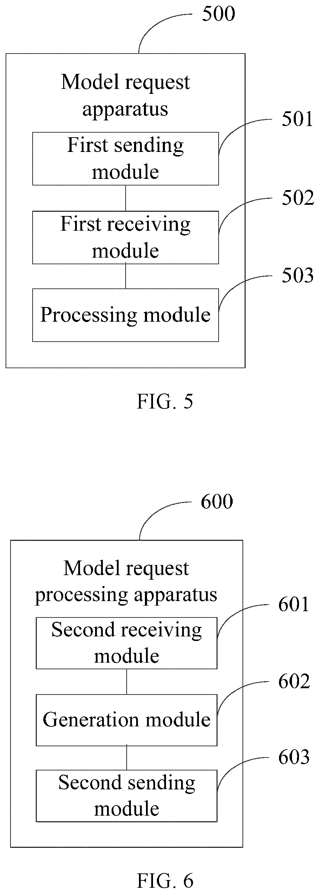

Refer to FIG. 5. FIG. 5 is a structural diagram of a model request apparatus according to an embodiment of this application. As shown in FIG. 5, the model request apparatus 500 includes:
a first sending module 501, configured to send a target request to a network side device, where the target request is used to request information about an artificial intelligence AI model;
a first receiving module 502, configured to receive the information about the AI model sent by the network side device; and
a processing module 503, configured to obtain the AI model based on the information about the AI model.

Optionally, the first sending module 501 is specifically configured as follows: In a case that a first condition is met, the terminal sends the target request to the network side device, where
the first condition includes at least one of the following:
a location of the terminal meets a first preset condition;
a first measurement quantity of the terminal falls within a preconfigured first measurement result range;
a first transmission parameter of the terminal meets a second preset condition;
there is a first requirement for the terminal; and
the terminal does not have the AI model.

Optionally, the first preset condition includes at least one of the following:
A serving cell in which the terminal is located falls within a first cell identifier range corresponding to a preconfigured cell identifier;
a tracking area TA in which the terminal is located falls within a first tracking area identifier range corresponding to a preconfigured TA identifier;
a RAN-based notification area RNA in which the terminal is located falls within a first area range corresponding to a preconfigured RNA;
a public land mobile network PLMN in which the terminal is located falls within a first communication network range corresponding to a preconfigured PLMN; and
a geographical location of the terminal falls within a preconfigured first geographical location range.

Optionally, the second preset condition includes at least one of the following:
A channel characteristic parameter or a preset representation of the channel characteristic parameter falls within a preconfigured first parameter range;
phase information between different transmit antennas or different transmit ports conforms to preconfigured first phase information, or a preset representation of the phase information between different transmit antennas or different transmit ports conforms to the first phase information;
a beam measurement parameter or a specific representation of the beam measurement parameter falls within a preconfigured second parameter range;
information corresponding to different receive beams conforms to preconfigured first beam information, or a specific representation of the information corresponding to different receive beams conforms to the first beam information;
information corresponding to different beam pairs conforms to preconfigured second beam information, or a specific representation of the information corresponding to different beam pairs conforms to the second beam information;
a measurement parameter obtained on at least one frequency falls within a preconfigured third parameter range;
data demodulation soft information conforms to preconfigured first preset information, or a specific representation of the data demodulation soft information conforms to the first preset information;
a transmission bit error rate of a data packet conforms to preconfigured second preset information, or a specific representation of the transmission bit error rate of the data packet conforms to the second preset information;
a block error rate conforms to preconfigured third preset information, or a specific representation of the block error rate conforms to the third preset information; and
interference measurement information conforms to preconfigured fourth preset information, or a specific representation of the interference measurement information conforms to the fourth preset information.

Optionally, the first sending module 501 is specifically configured as follows: In a case that a second condition is met, the terminal sends the target request to the network side device, where the second condition is an update condition of the AI model.

The processing module 503 is specifically configured as follows: The terminal updates an original AI model based on the information about the AI model, to obtain a target AI model.

Optionally, the second condition includes at least one of the following:
A location of the terminal meets a third preset condition;
a first measurement quantity of the terminal falls within a preconfigured second measurement result range;
a first transmission parameter of the terminal meets a fourth preset condition;
there is a first requirement for the terminal;
an inference result confidence of the AI model reaches a threshold;
a validity period of the AI model expires;
the terminal moves outside a valid area of the AI model; and
the terminal has no valid AI model.

Optionally, the third preset condition includes at least one of the following:
A serving cell in which the terminal is located falls within a second cell identifier range corresponding to a preconfigured cell identifier;
a TA in which the terminal is located falls within a second tracking area identifier range corresponding to a preconfigured TA identifier;
an RNA in which the terminal is located falls within a second area range corresponding to a preconfigured RNA;
a PLMN in which the terminal is located falls within a second communication network range corresponding to a preconfigured PLMN; and
a geographical location of the terminal falls within a preconfigured second geographical location range.

Optionally, the fourth preset condition includes at least one of the following:
A channel characteristic parameter or a preset representation of the channel characteristic parameter falls within a preconfigured fourth parameter range;
phase information between different transmit antennas or different transmit ports conforms to preconfigured second phase information, or a preset representation of the phase information between different transmit antennas or different transmit ports conforms to the second phase information;
a beam measurement parameter or a specific representation of the beam measurement parameter falls within a preconfigured fifth parameter range;
information corresponding to different receive beams conforms to preconfigured third beam information, or a specific representation of the information corresponding to different receive beams conforms to the third beam information;
information corresponding to different beam pairs conforms to preconfigured fourth beam information, or a specific representation of the information corresponding to different beam pairs conforms to the fourth beam information;
a measurement parameter obtained on at least one frequency falls within a preconfigured sixth parameter range;
data demodulation soft information conforms to preconfigured fifth preset information, or a specific representation of the data demodulation soft information conforms to the fifth preset information;
a transmission bit error rate of a data packet conforms to preconfigured sixth preset information, or a specific representation of the transmission bit error rate of the data packet conforms to the sixth preset information;
a block error rate conforms to preconfigured seventh preset information, or a specific representation of the block error rate conforms to the seventh preset information; and
interference measurement information conforms to preconfigured eighth preset information, or a specific representation of the interference measurement information conforms to the eighth preset information.

Optionally, the first measurement quantity includes at least one of the following: a signal noise ratio, a reference signal received power RSRP, a signal-to-noise and interference ratio SINR, reference signal received quality RSRQ, a packet delay, a round-trip time RTT, an observed time difference of arrival OTDOA, a measurement result corresponding to channel state information, and a measurement result corresponding to user quality of experience.

Optionally, a measurement resource corresponding to the first measurement quantity includes at least one of the following:
a physical downlink control channel PDCCH demodulation reference signal DMRS;
a physical downlink shared channel PDSCH DMRS;
a channel state information reference signal CSI-RS;
a synchronization signal and PBCH block SSB; and
a positioning reference signal PRS.

Optionally, the first transmission parameter includes at least one of the following:
a channel characteristic parameter;
phase information between different transmit antennas or different transmit ports;
a measurement parameter obtained on at least one beam;
information corresponding to different beam pairs;
a measurement parameter obtained on at least one frequency;
data demodulation soft information;
a transmission bit error rate or block error rate of a data packet; and
interference measurement information.

Optionally, the first requirement includes at least one of the following: reporting of a radio resource management RRM measurement report, handover decision, redirection decision, positioning result generation, reporting of channel state information CSI, user track prediction, user service requirement prediction, and user slice requirement prediction.

Optionally, the valid area is determined based on at least one of the following: a cell list, a TA list, an RNA list, a PLMN list, and a geographical location.

Optionally, the information about the AI model includes at least one of the following: an identifier of the AI model, an output parameter of the AI model, structure information about the AI model, model parameter information about the AI model, and processing mode information about data of the AI model.

Optionally, the information about the AI model includes at least one of the following: the update condition of the AI model, the validity period of the AI model, the valid area of the AI model, an input parameter of the AI model, and a default value corresponding to the input parameter of the AI model.

Optionally, the target request carries at least one of the following: terminal state information, a radio signal measurement result, AI capability information, and preference information for the AI model.

Optionally, the terminal state information includes at least one of the following:
location information about the terminal;
moving information about the terminal; and
service information about the terminal.

Optionally, the radio signal measurement result includes at least one of the following:
an RSRP of the network side device; and
RSRQ of the network side device.

Optionally, the AI capability information includes at least one of the following:
a supported AI model structure;
a supported AI model data processing mode; and
a supported AI model input parameter.

Optionally, the preference information includes at least one of the following: a preference for a structure of the AI model and a preference for a data processing mode of the AI model.

The model request apparatus provided in this embodiment of this application can implement the processes of the method embodiment in FIG. 3. To avoid repetition, details are not described herein again.

Refer to FIG. 6. FIG. 6 is a structural diagram of a model request processing apparatus according to an embodiment of this application. As shown in FIG. 6, the model request processing apparatus 600 includes:
a second receiving module 601, configured to receive a target request sent by a terminal;
a generation module 602, configured to obtain information about an artificial intelligence AI model based on the target request; and
a second sending module 603, configured to send the information about the AI model to the terminal.

Optionally, the target request carries at least one of the following: terminal state information, a radio signal measurement result, AI capability information, and preference information for the AI model.

Optionally, the information about the AI model includes at least one of the following: an identifier of the AI model, an output parameter of the AI model, structure information about the AI model, model parameter information about the AI model, and processing mode information about data of the AI model.

Optionally, the information about the AI model includes at least one of the following: an update condition of the AI model, a validity period of the AI model, a valid area of the AI model, an input parameter of the AI model, and a default value corresponding to the input parameter of the AI model.

Optionally, the terminal state information includes at least one of the following:
location information about the terminal;
moving information about the terminal; and
service information about the terminal.

Optionally, the radio signal measurement result includes at least one of the following:
an RSRP of the network side device; and
RSRQ of the network side device.

Optionally, the AI capability information includes at least one of the following:
a supported AI model structure;
a supported AI model data processing mode; and
a supported AI model input parameter.

Optionally, the preference information includes at least one of the following: a preference for a structure of the AI model and a preference for a data processing mode of the AI model.

The model request processing apparatus provided in this embodiment of this application can implement the processes of the method embodiment in FIG. 3. To avoid repetition, details are not described herein again.

The model request apparatus and the model request processing apparatus in this embodiment of this application may be an apparatus or an apparatus or electronic device with an operating system, or may be a component, an integrated circuit, or a chip in a terminal. The apparatus may be a mobile terminal or a non-mobile terminal. For example, the mobile terminal may include but be not limited to the types of the terminal 11 listed above, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

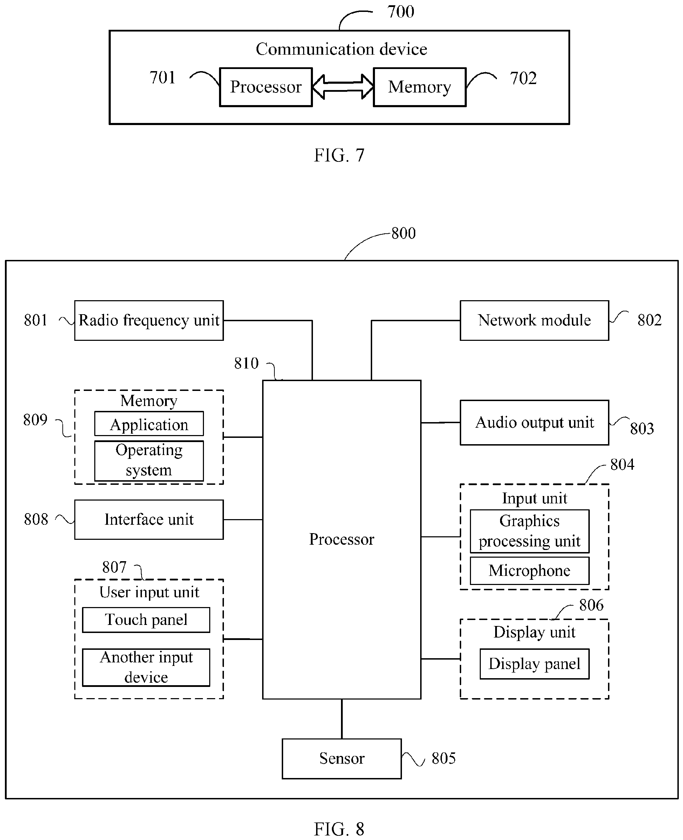

Optionally, as shown in FIG. 7, an embodiment of this application further provides a communication device 700, including a processor 701, a memory 702, and a program or an instruction that is stored in the memory 702 and that can be run on the processor 701. For example, when the communication device 700 is a terminal, and the program or the instruction is executed by the processor 701, the processes of the foregoing model request method embodiment are implemented, and a same technical effect is achieved. When the communication device 700 is a network side device, and the program or the instruction is executed by the processor 701, the processes of the foregoing model request processing method embodiment are implemented, and a same technical effect can be achieved. To avoid repetition, details are not described herein again.

An embodiment of this application further provides a terminal, including a processor and a communication interface. The communication interface is configured to: send a target request to a network side device, where the target request is used to request information about an artificial intelligence AI model; and receive the information about the AI model sent by the network side device. The processor is configured to obtain the AI model based on the information about the AI model. This terminal embodiment corresponds to the foregoing method embodiment on the terminal side. Each implementation process and implementation of the foregoing method embodiment are applicable to this terminal embodiment, and a same technical effect can be achieved. Specifically, FIG. 8 is a schematic diagram of a hardware structure of a terminal according to an embodiment of this application.

The terminal 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

A person skilled in the art can understand that the terminal 800 may further include a power supply (such as a battery) that supplies power to each component. The power supply may be logically connected to the processor 810 by using a power supply management system, to implement functions such as charging and discharging management, and power consumption management by using the power supply management system. The terminal structure shown in FIG. 8 constitutes no limitation on the terminal, and the terminal may include more or fewer components than those shown in the figure, or combine some components, or have different component arrangements. Details are not described herein.

It should be understood that, in this embodiment of this application, the input unit 804 may include a graphics processing unit (Graphics Processing Unit, GPU) and a microphone. The graphics processing unit processes image data of a still image or a video obtained by an image capture apparatus (for example, a camera) in a video capture mode or an image capture mode. The display unit 806 may include a display panel. The display panel may be configured in a form such as a liquid crystal display or an organic light-emitting diode. The user input unit 807 includes a touch panel and another input device. The touch panel is also referred to as a touchscreen. The touch panel may include two parts: a touch detection apparatus and a touch controller. The another input device may include but be not limited to a physical keyboard, a functional button (such as a volume control button or a power on/off button), a trackball, a mouse, and a joystick. Details are not described herein.

In this embodiment of this application, the radio frequency unit 801 receives downlink data from a network side device and then sends the downlink data to the processor 810 for processing; and sends uplink data to the network side device. Usually, the radio frequency unit 801 includes but is not limited to an antenna, at least one amplifier, a transceiver, a coupler, a low noise amplifier, a duplexer, and the like.

The memory 809 may be configured to store a software program or an instruction and various data. The memory 809 may mainly include a program or instruction storage area and a data storage area. The program or instruction storage area may store an operating system, an application or an instruction required by at least one function (for example, a sound playing function or an image playing function), and the like. In addition, the memory 809 may include a high-speed random access memory and a non-transitory memory. The non-transitory memory may be a read-only memory (Read-only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-transitory solid-state storage device.

The processor 810 may include one or more processing units. Optionally, an application processor and a modem processor may be integrated into the processor 810. The application processor mainly processes an operating system, a user interface, an application, an instruction, or the like. The modem processor mainly processes wireless communication, for example, a baseband processor. It may be understood that, alternatively, the modem processor may not be integrated into the processor 810.

The radio frequency unit 801 is configured to: send a target request to a network side device, where the target request is used to request information about an artificial intelligence AI model; and receive the information about the AI model sent by the network side device.

The processor 810 is configured to obtain the AI model based on the information about the AI model.

Optionally, the radio frequency unit 801 is specifically configured to send the target request to the network side device in a case that a first condition is met, where
the first condition includes at least one of the following:
a location of the terminal meets a first preset condition;
a first measurement quantity of the terminal falls within a preconfigured first measurement result range;
a first transmission parameter of the terminal meets a second preset condition;
there is a first requirement for the terminal; and
the terminal does not have the AI model.

Optionally, the first preset condition includes at least one of the following:
A serving cell in which the terminal is located falls within a first cell identifier range corresponding to a preconfigured cell identifier;
a tracking area TA in which the terminal is located falls within a first tracking area identifier range corresponding to a preconfigured TA identifier;
a RAN-based notification area RNA in which the terminal is located falls within a first area range corresponding to a preconfigured RNA;
a public land mobile network PLMN in which the terminal is located falls within a first communication network range corresponding to a preconfigured PLMN; and
a geographical location of the terminal falls within a preconfigured first geographical location range.

Optionally, the second preset condition includes at least one of the following:
A channel characteristic parameter or a preset representation of the channel characteristic parameter falls within a preconfigured first parameter range;
phase information between different transmit antennas or different transmit ports conforms to preconfigured first phase information, or a preset representation of the phase information between different transmit antennas or different transmit ports conforms to the first phase information;
a beam measurement parameter or a specific representation of the beam measurement parameter falls within a preconfigured second parameter range;
information corresponding to different receive beams conforms to preconfigured first beam information, or a specific representation of the information corresponding to different receive beams conforms to the first beam information;
information corresponding to different beam pairs conforms to preconfigured second beam information, or a specific representation of the information corresponding to different beam pairs conforms to the second beam information;
a measurement parameter obtained on at least one frequency falls within a preconfigured third parameter range;
data demodulation soft information conforms to preconfigured first preset information, or a specific representation of the data demodulation soft information conforms to the first preset information;
a transmission bit error rate of a data packet conforms to preconfigured second preset information, or a specific representation of the transmission bit error rate of the data packet conforms to the second preset information;
a block error rate conforms to preconfigured third preset information, or a specific representation of the block error rate conforms to the third preset information; and
interference measurement information conforms to preconfigured fourth preset information, or a specific representation of the interference measurement information conforms to the fourth preset information.

Optionally, the radio frequency unit 801 is specifically configured to send the target request to the network side device in a case that a second condition is met, where the second condition is an update condition of the AI model.

The processor 810 is specifically configured to update an original AI model based on the information about the AI model, to obtain a target AI model.

Optionally, the second condition includes at least one of the following:
A location of the terminal meets a third preset condition;
a first measurement quantity of the terminal falls within a preconfigured second measurement result range;
a first transmission parameter of the terminal meets a fourth preset condition;
there is a first requirement for the terminal;
an inference result confidence of the AI model reaches a threshold;
a validity period of the AI model expires;
the terminal moves outside a valid area of the AI model; and
the terminal has no valid AI model.

Optionally, the third preset condition includes at least one of the following:
A serving cell in which the terminal is located falls within a second cell identifier range corresponding to a preconfigured cell identifier;
a TA in which the terminal is located falls within a second tracking area identifier range corresponding to a preconfigured TA identifier;
an RNA in which the terminal is located falls within a second area range corresponding to a preconfigured RNA;
a PLMN in which the terminal is located falls within a second communication network range corresponding to a preconfigured PLMN; and
a geographical location of the terminal falls within a preconfigured second geographical location range.

Optionally, the fourth preset condition includes at least one of the following:
A channel characteristic parameter or a preset representation of the channel characteristic parameter falls within a preconfigured fourth parameter range;
phase information between different transmit antennas or different transmit ports conforms to preconfigured second phase information, or a preset representation of the phase information between different transmit antennas or different transmit ports conforms to the second phase information;
a beam measurement parameter or a specific representation of the beam measurement parameter falls within a preconfigured fifth parameter range;
information corresponding to different receive beams conforms to preconfigured third beam information, or a specific representation of the information corresponding to different receive beams conforms to the third beam information;
information corresponding to different beam pairs conforms to preconfigured fourth beam information, or a specific representation of the information corresponding to different beam pairs conforms to the fourth beam information;
a measurement parameter obtained on at least one frequency falls within a preconfigured sixth parameter range;
data demodulation soft information conforms to preconfigured fifth preset information, or a specific representation of the data demodulation soft information conforms to the fifth preset information;
a transmission bit error rate of a data packet conforms to preconfigured sixth preset information, or a specific representation of the transmission bit error rate of the data packet conforms to the sixth preset information;
a block error rate conforms to preconfigured seventh preset information, or a specific representation of the block error rate conforms to the seventh preset information; and
interference measurement information conforms to preconfigured eighth preset information, or a specific representation of the interference measurement information conforms to the eighth preset information.

Optionally, the first measurement quantity includes at least one of the following: a signal noise ratio, a reference signal received power RSRP, a signal-to-noise and interference ratio SINR, reference signal received quality RSRQ, a packet delay, a round-trip time RTT, an observed time difference of arrival OTDOA, a measurement result corresponding to channel state information, and a measurement result corresponding to user quality of experience.

Optionally, a measurement resource corresponding to the first measurement quantity includes at least one of the following:
a physical downlink control channel PDCCH demodulation reference signal DMRS;
a physical downlink shared channel PDSCH DMRS;
a channel state information reference signal CSI-RS;
a synchronization signal and PBCH block SSB; and
a positioning reference signal PRS.

Optionally, the first transmission parameter includes at least one of the following:
a channel characteristic parameter;
phase information between different transmit antennas or different transmit ports;
a measurement parameter obtained on at least one beam;
information corresponding to different beam pairs;
a measurement parameter obtained on at least one frequency;
data demodulation soft information;
a transmission bit error rate or block error rate of a data packet; and
interference measurement information.

Optionally, the first requirement includes at least one of the following: reporting of a radio resource management RRM measurement report, handover decision, redirection decision, positioning result generation, reporting of channel state information CSI, user track prediction, user service requirement prediction, and user slice requirement prediction.

Optionally, the valid area is determined based on at least one of the following: a cell list, a TA list, an RNA list, a PLMN list, and a geographical location.

Optionally, the information about the AI model includes at least one of the following: an identifier of the AI model, an output parameter of the AI model, structure information about the AI model, model parameter information about the AI model, and processing mode information about data of the AI model.

Optionally, the information about the AI model includes at least one of the following: an update condition of the AI model, a validity period of the AI model, a valid area of the AI model, an input parameter of the AI model, and a default value corresponding to the input parameter of the AI model.

Optionally, the target request carries at least one of the following: terminal state information, a radio signal measurement result, AI capability information, and preference information for the AI model.

Optionally, the terminal state information includes at least one of the following: location information about the terminal, moving information about the terminal, and service information about the terminal.

Optionally, the radio signal measurement result includes at least one of the following:
an RSRP of the network side device; and
RSRQ of the network side device.

Optionally, the AI capability information includes at least one of the following:
a supported AI model structure;
a supported AI model data processing mode; and
a supported AI model input parameter.

Optionally, the preference information includes at least one of the following: a preference for a structure of the AI model and a preference for a data processing mode of the AI model.

An embodiment of this application further provides a network side device, including a processor and a communication interface. The communication interface is configured to receive a target request sent by a terminal. The processor is configured to obtain information about an artificial intelligence AI model based on the target request. The communication interface is further configured to send the information about the AI model to the terminal. This network side device embodiment corresponds to the foregoing method embodiment on the network side device. Each implementation process and implementation of the foregoing method embodiment are applicable to this network side device embodiment, and a same technical effect can be achieved.

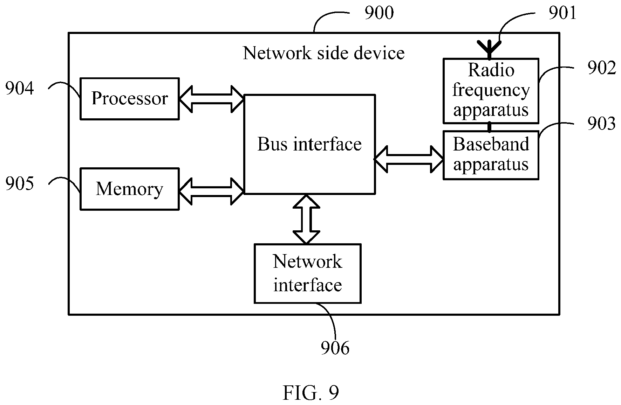

Specifically, an embodiment of this application further provides a network side device. As shown in FIG. 9, the network side device 900 includes an antenna 901, a radio frequency apparatus 902, and a baseband apparatus 903. The antenna 901 is connected to the radio frequency apparatus 902. In an uplink direction, the radio frequency apparatus 902 receives information by using the antenna 901, and sends the received information to the baseband apparatus 903 for processing. In a downlink direction, the baseband apparatus 903 processes information that needs to be sent, and sends processed information to the radio frequency apparatus 902. The radio frequency apparatus 902 processes the received information, and sends processed information by using the antenna 901.

The frequency band processing apparatus may be located in the baseband apparatus 903. The method performed by the network side device in the foregoing embodiment may be implemented in the baseband apparatus 903. The baseband apparatus 903 includes a processor 904 and a memory 905.

The baseband apparatus 903 may include, for example, at least one baseband board, where a plurality of chips are disposed on the baseband board. As shown in FIG. 9, for example, one chip is the processor 904, which is connected to the memory 905, to invoke a program in the memory 905 to perform operations of the network side device shown in the foregoing method embodiment.

The baseband apparatus 903 may further include a network interface 906, configured to exchange information with the radio frequency apparatus 902. For example, the interface is a common public radio interface (common public radio interface, CPRI).

Specifically, the network side device in this embodiment of this application further includes an instruction or a program that is stored in the memory 905 and that can be run on the processor 904. The processor 904 invokes the instruction or the program in the memory 905 to perform the method performed by the modules shown in FIG. 6, and a same technical effect is achieved. To avoid repetition, details are not described herein again.

An embodiment of this application further provides a readable storage medium. The readable storage medium stores a program or an instruction. When the program or the instruction is executed by a processor, the processes of the foregoing model request method or model request processing method embodiment are implemented, and a same technical effect can be achieved. To avoid repetition, details are not described herein again.

The processor is a processor in the electronic device in the foregoing embodiment. The readable storage medium includes a computer-readable storage medium, such as a computer read-only memory (Read-only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing model request method or model request processing method embodiment, and a same technical effect can be achieved. To avoid repetition, details are not described herein again.

It should be understood that the chip mentioned in this embodiment of this application may also be referred to as a system-level chip, a system chip, a chip system, an on-chip system chip, or the like.

An embodiment of this application further provides a program product. The program product is stored in a non-transitory storage medium, and the program product is executed by at least one processor to implement the processes of the foregoing model request method or model request processing method embodiment, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. An element limited by "includes a ..." does not, without more constraints, preclude the presence of additional identical elements in the process, method, article, or apparatus that includes the element. In addition, it should be noted that the scope of the method and the apparatus in the implementations of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (for example, a ROM/RAM, a floppy disk, or an optical disc), and includes several instructions for instructing a terminal (which may be a mobile phone, a computer, a server, an air conditioner, a base station, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A model request method, comprising:
sending, by a terminal, a target request to a network side device, wherein the target request is used to request information about an artificial intelligence AI model;
receiving, by the terminal, the information about the AI model sent by the network side device; and
obtaining, by the terminal, the AI model based on the information about the AI model.

2. The method according to claim 1, wherein the sending, by a terminal, a target request to a network side device comprises:
in a case that a first condition is met, sending, by the terminal, the target request to the network side device, wherein
the first condition comprises at least one of the following:
a location of the terminal meets a first preset condition;
a first measurement quantity of the terminal falls within a preconfigured first measurement result range;
a first transmission parameter of the terminal meets a second preset condition;
there is a first requirement for the terminal; and
the terminal does not have the AI model.

3. The method according to claim 2, wherein the first preset condition comprises at least one of the following:
a serving cell in which the terminal is located falls within a first cell identifier range corresponding to a preconfigured cell identifier;
a tracking area TA in which the terminal is located falls within a first tracking area identifier range corresponding to a preconfigured TA identifier;
a RAN-based notification area RNA in which the terminal is located falls within a first area range corresponding to a preconfigured RNA;
a public land mobile network PLMN in which the terminal is located falls within a first communication network range corresponding to a preconfigured PLMN; and
a geographical location of the terminal falls within a preconfigured first geographical location range.

4. The method according to claim 2, wherein the second preset condition comprises at least one of the following:
a channel characteristic parameter or a preset representation of the channel characteristic parameter falls within a preconfigured first parameter range;
phase information between different transmit antennas or different transmit ports conforms to preconfigured first phase information, or a preset representation of the phase information between different transmit antennas or different transmit ports conforms to the first phase information;
a beam measurement parameter or a specific representation of the beam measurement parameter falls within a preconfigured second parameter range;
information corresponding to different receive beams conforms to preconfigured first beam information, or a specific representation of the information corresponding to different receive beams conforms to the first beam information;
information corresponding to different beam pairs conforms to preconfigured second beam information, or a specific representation of the information corresponding to different beam pairs conforms to the second beam information;
a measurement parameter obtained on at least one frequency falls within a preconfigured third parameter range;
data demodulation soft information conforms to preconfigured first preset information, or a specific representation of the data demodulation soft information conforms to the first preset information;
a transmission bit error rate of a data packet conforms to preconfigured second preset information, or a specific representation of the transmission bit error rate of the data packet conforms to the second preset information;
a block error rate conforms to preconfigured third preset information, or a specific representation of the block error rate conforms to the third preset information; and
interference measurement information conforms to preconfigured fourth preset information, or a specific representation of the interference measurement information conforms to the fourth preset information.

5. The method according to claim 1, wherein the sending, by a terminal, a target request to a network side device comprises:
in a case that a second condition is met, sending, by the terminal, the target request to the network side device, wherein the second condition is an update condition of the AI model; and
the obtaining, by the terminal, the AI model based on the information about the AI model comprises:
updating, by the terminal, an original AI model based on the information about the AI model, to obtain a target AI model.

6. The method according to claim 5, wherein the second condition comprises at least one of the following:
a location of the terminal meets a third preset condition;
a first measurement quantity of the terminal falls within a preconfigured second measurement result range;
a first transmission parameter of the terminal meets a fourth preset condition;
there is a first requirement for the terminal;
an inference result confidence of the AI model reaches a threshold;
a validity period of the AI model expires;
the terminal moves outside a valid area of the AI model; and
the terminal has no valid AI model.

7. The method according to claim 6, wherein the third preset condition comprises at least one of the following:
a serving cell in which the terminal is located falls within a second cell identifier range corresponding to a preconfigured cell identifier;
a TA in which the terminal is located falls within a second tracking area identifier range corresponding to a preconfigured TA identifier;
an RNA in which the terminal is located falls within a second area range corresponding to a preconfigured RNA;
a PLMN in which the terminal is located falls within a second communication network range corresponding to a preconfigured PLMN; and
a geographical location of the terminal falls within a preconfigured second geographical location range.

8. The method according to claim 6, wherein the fourth preset condition comprises at least one of the following:
a channel characteristic parameter or a preset representation of the channel characteristic parameter falls within a preconfigured fourth parameter range;
phase information between different transmit antennas or different transmit ports conforms to preconfigured second phase information, or a preset representation of the phase information between different transmit antennas or different transmit ports conforms to the second phase information;
a beam measurement parameter or a specific representation of the beam measurement parameter falls within a preconfigured fifth parameter range;
information corresponding to different receive beams conforms to preconfigured third beam information, or a specific representation of the information corresponding to different receive beams conforms to the third beam information;
information corresponding to different beam pairs conforms to preconfigured fourth beam information, or a specific representation of the information corresponding to different beam pairs conforms to the fourth beam information;
a measurement parameter obtained on at least one frequency falls within a preconfigured sixth parameter range;
data demodulation soft information conforms to preconfigured fifth preset information, or a specific representation of the data demodulation soft information conforms to the fifth preset information;
a transmission bit error rate of a data packet conforms to preconfigured sixth preset information, or a specific representation of the transmission bit error rate of the data packet conforms to the sixth preset information;
a block error rate conforms to preconfigured seventh preset information, or a specific representation of the block error rate conforms to the seventh preset information; and
interference measurement information conforms to preconfigured eighth preset information, or a specific representation of the interference measurement information conforms to the eighth preset information.

9. The method according to claim 2 or 6, wherein the first measurement quantity comprises at least one of the following: a signal noise ratio, a reference signal received power RSRP, a signal-to-noise and interference ratio SINR, reference signal received quality RSRQ, a packet delay, a round-trip time RTT, an observed time difference of arrival OTDOA, a measurement result corresponding to channel state information, and a measurement result corresponding to user quality of experience.

10. The method according to claim 2 or 6, wherein a measurement resource corresponding to the first measurement quantity comprises at least one of the following:
a physical downlink control channel PDCCH demodulation reference signal DMRS;
a physical downlink shared channel PDSCH DMRS;
a channel state information reference signal CSI-RS;
a synchronization signal and PBCH block SSB; and
a positioning reference signal PRS.

11. The method according to claim 2 or 6, wherein the first transmission parameter comprises at least one of the following:
a channel characteristic parameter;
phase information between different transmit antennas or different transmit ports;
a measurement parameter obtained on at least one beam;
information corresponding to different beam pairs;
a measurement parameter obtained on at least one frequency;
data demodulation soft information;
a transmission bit error rate or block error rate of a data packet; and
interference measurement information.

12. The method according to claim 2 or 6, wherein the first requirement comprises at least one of the following: reporting of a radio resource management RRM measurement report, handover decision, redirection decision, positioning result generation, reporting of channel state information CSI, user track prediction, user service requirement prediction, and user slice requirement prediction.

13. The method according to claim 6, wherein the valid area is determined based on at least one of the following: a cell list, a TA list, an RNA list, a PLMN list, and a geographical location.

14. The method according to any one of claims 1 to 8, wherein the information about the AI model comprises at least one of the following: an identifier of the AI model, an output parameter of the AI model, structure information about the AI model, model parameter information about the AI model, and processing mode information about data of the AI model.

15. The method according to claim 14, wherein the information about the AI model further comprises at least one of the following: the update condition of the AI model, the validity period of the AI model, the valid area of the AI model, an input parameter of the AI model, and a default value corresponding to the input parameter of the AI model.

16. The method according to any one of claims 1 to 8, wherein the target request carries at least one of the following: terminal state information, a radio signal measurement result, AI capability information, and preference information for the AI model.

17. The method according to claim 16, wherein the terminal state information comprises at least one of the following:
location information about the terminal;
moving information about the terminal; and
service information about the terminal.

18. The method according to claim 16, wherein the radio signal measurement result comprises at least one of the following:
an RSRP of the network side device; and
RSRQ of the network side device.

19. The method according to claim 16, wherein the AI capability information comprises at least one of the following:
a supported AI model structure;
a supported AI model data processing mode; and
a supported AI model input parameter .

20. The method according to claim 16, wherein the preference information comprises at least one of the following: a preference for a structure of the AI model and a preference for a data processing mode of the AI model.

21. A model request processing method, comprising: receiving, by a network side device, a target request sent by a terminal;
obtaining, by the network side device, information about an artificial intelligence AI model based on the target request; and
sending, by the network side device, the information about the AI model to the terminal.

22. The method according to claim 21, wherein the information about the AI model comprises at least one of the following: an identifier of the AI model, an output parameter of the AI model, structure information about the AI model, model parameter information about the AI model, and processing mode information about data of the AI model.

23. The method according to claim 22, wherein the information about the AI model further comprises at least one of the following: an update condition of the AI model, a validity period of the AI model, a valid area of the AI model, an input parameter of the AI model, and a default value corresponding to the input parameter of the AI model.

24. The method according to any one of claims 21 to 23, wherein the target request carries at least one of the following: terminal state information, a radio signal measurement result, AI capability information, and preference information for the AI model.

25. The method according to claim 24, wherein the terminal state information comprises at least one of the following:
location information about the terminal;
moving information about the terminal; and
service information about the terminal.

26. The method according to claim 24, wherein the radio signal measurement result comprises at least one of the following:
an RSRP of the network side device; and
RSRQ of the network side device.

27. The method according to claim 24, wherein the AI capability information comprises at least one of the following:
a supported AI model structure;
a supported AI model data processing mode; and
a supported AI model input parameter.

28. The method according to claim 24, wherein the preference information comprises at least one of the following: a preference for a structure of the AI model and a preference for a data processing mode of the AI model.

29. A model request apparatus, comprising:
a first sending module, configured to send a target request to a network side device, wherein the target request is used to request information about an artificial intelligence AI model;
a first receiving module, configured to receive the information about the AI model sent by the network side device; and
a processing module, configured to obtain the AI model based on the information about the AI model.

30. The apparatus according to claim 29, wherein the information about the AI model comprises at least one of the following: an identifier of the AI model, an output parameter of the AI model, structure information about the AI model, model parameter information about the AI model, and processing mode information about data of the AI model.

31. A model request processing apparatus, comprising:
a second receiving module, configured to receive a target request sent by a terminal;
a generation module, configured to obtain information about an artificial intelligence AI model based on the target request; and
a second sending module, configured to send the information about the AI model to the terminal.

32. The apparatus according to claim 31, wherein the information about the AI model comprises at least one of the following: an identifier of the AI model, an output parameter of the AI model, structure information about the AI model, model parameter information about the AI model, and processing mode information about data of the AI model.

33. A terminal, comprising a memory, a processor, and a program that is stored in the memory and that can be run on the processor, wherein when the program is executed by the processor, steps of the model request method according to any one of claims 1 to 20 are implemented.

34. A network side device, comprising a memory, a processor, and a program or an instruction that is stored in the memory and that can be run on the processor, wherein when the program or the instruction is executed by the processor, steps of the model request processing method according to any one of claims 21 to 28 are implemented.

35. A readable storage medium, wherein the readable storage medium stores a program or an instruction, and when the program or the instruction is executed by a processor, steps of the model request method according to any one of claims 1 to 20 are implemented, or when the program or the instruction is executed by a processor, steps of the model request processing method according to any one of claims 21 to 28 are implemented.
